# EUROPEAN PATENT SPECIFICATION

(11) **EP 3 907 032 B1**
(45) Date of publication and mention of the grant of the patent: **19.04.2023**
(21) Application number: 20843168.4
(22) Date of filing: 22.06.2020
(51) Int. Cl.: B23H 7/02, B23H 1/02, B23H 7/34

(54) **DEBRIS REMOVAL METHOD FOR ELECTRIC SPARK MACHINING**
VERFAHREN VON ZUM ABFÜHREN VON RÜCKSTÄNDEN BEI FUNKENEROSIVER BEARBEITUNG
PROCÉDÉ D'ÉLIMINATION DES DÉBRIS POUR L'USINAGE PAR ÉTINCELAGE

(30) Priority: 25.07.2019 CN 201910675539
(43) Date of publication of application: 10.11.2021
(73) Proprietor: Beijing Dongxing Lubricant Co., Ltd., Beijing 100102 (CN)
(72) Inventor: HE, Ciwen, Beijing 100102 (CN); ZHAO, Jinsheng, Beijing 100102 (CN)
(74) Representative: Appleyard Lees IP LLP
(86) International application number: PCT/CN2020/097556
(87) International publication number: WO 2021/012858

(56) References cited:
- CN-A- 87 103 438
- CN-A- 101 161 797
- CN-A- 109 108 410
- CN-A- 109 108 413
- JP-A- 2001 157 921
- KR-A- 20100 069 038
- US-A- 4 507 533

## Description

### Technical Field

The present invention relates to the field of electrical discharge machining, in particular to an enhanced chip removal method for electrical discharge machining according to the preamble of claim 1. Such a method is known from JP 2001 157921 A.

### Background of the Invention

Electrical discharge machining (EDM) is to utilize pulsed spark discharge to etch the material to be machined. In electrical discharge machining, the machining electrodes are not in contact with the material to be machined, due to existence of liquid electrolyte therebetween, thus a relatively soft electrode (tool) may be used to process a hard and brittle conductor (such as metal) and semiconductor materials. A moving wire electrode is widely used for cutting process in electrical discharge machining. The wire electrode cutting may be categorized into unidirectional wire movement (slow wire movement) cutting and reciprocating wire movement (rapid wire movement), wherein the reciprocating wire movement cutting is a unique mechanical, electrical and medium integrated technique developed independently in China with complete intellectual property right, and has such advantages as low manufacturing cost of the equipment and repeated use of molybdenum alloy wire electrodes (molybdenum wires) for discharging. The technique is especially suitable for machining materials that have high hardness, high strength, high melting point, high toughness, high brittleness (e.g., tungsten-molybdenum alloys, memory alloys, magnesium alloys, hard alloys, polycrystalline diamond, and NdFeB alloys, etc.), and is widely used in machining and manufacturing of high-precision or special shaped parts in fields of mold manufacturing, aviation and aerospace, medical equipment, instruments and meters, electronic and electric appliances, and machine manufacturing, etc.

In most cases, reciprocating wire movement cutting is used for high-efficiency cutting to improve productivity. However, it is difficult to achieve continuous and stable machining in high efficiency at 200mm²/min or above, owing to a fact that large-size chips of the discharge product, produced as a result of the high discharge energy in the high cutting efficiency at 200m²/min or higher, are difficult to be discharged through a narrow gap. There are two phenomena:
1. The wire breaking phenomenon occurs frequently;
2. A welding-like phenomenon occurs on the surface of the machined work piece.

### Summary of the Invention

To solve the above-mentioned problems in the prior art, the present invention provides an enhanced chip removal method, eliminating or destroying the condition for producing large-size particles between the electrodes by high pulse discharge during the reciprocating wire movement cutting process, such that the granularity of the chips produced by high energy discharge is decreased by 50% and thus the chips can be discharged successfully and smoothly through the narrow gaps, a stable cutting process with high efficiency of 350m²/min or above is achieved and the productivity is greatly improved.

The enhanced chip removal method for electrical discharge machining in the present invention comprises: employing water-soluble wire cutting fluid in the electrical discharge cutting process; employing high-frequency and low-frequency pulse power supply units and employing superposed discharge pulses in dual frequencies to provide discharge pulses between the electrodes, wherein: the high-frequency and low-frequency pulse power supply units are two separate power supply units, the low-frequency pulse power supply unit emits large discharge pulses for a duration of 30~90 microseconds between the electrodes while the high-frequency pulse power supply unit emits small discharge pulses for a duration of 100∼500 nanoseconds between the electrodes; the high-frequency pulse power supply unit and the low-frequency pulse power supply unit emit discharge pulses in two circuits simultaneously, which are superposed on each other, between the electrodes.

The water-soluble wire cutting fluid comprises the following components:

| | |
|---|---|
| polyalkyl glycol and/or polyol | 20∼46 wt% |
| alcoholamines | 2∼8 wt% |
| water-soluble antirust agent | 24∼38 wt% |
| non-ionic surfactant | 2-4 wt% |
| anionic surfactant | 3∼6 wt% |
| low-foam environment-friendly emulsifier | 2-4 wt% |
| distilled water | balanced amount |

Preferably, the low-frequency pulse power supply unit emits large discharge pulses for a duration of 70 microseconds between the electrodes, and the high-frequency pulse power supply unit emits small discharge pulses for a duration of 250 nanoseconds between the electrodes.

Preferably, the polyalkyl glycol and/or polyol is selected from one or more of ethylene glycol, diethylene glycol, triethylene glycol, propylene glycol, glycerol and polyethylene glycol, wherein the molecular weight of the polyethylene glycol is 200-800.

Preferably, the water-soluble antirust agent is a mixture of A1 and A2, wherein A1 is selected from one or more of AQUALOX@240, boric acid, p-tert-butyl benzoic acid, C6-C14 aliphatic dibasic acids and octanoic acid, and A2 is selected from one or more of monoethanolamine, triethanolamine, isopropanolamine, diisopropanolamine, triisopropanolamine, mixed isopropanolamine, morpholine and butanolamine.

Preferably, the alcoholamine is selected from one or more of monoethanolamine, triethanolamine, isopropanolamine, diisopropanolamine, triisopropanolamine, butanolamine, diethylene glycol amine and 2-amino-2-methyl-1-propanol; the non-ionic surfactant is selected from one or more of amide, polyethylene oxide-propylene oxide ether and polyether diol PE series.

Preferably, the anionic surfactant is selected from one or more of ether carboxylate, alkyl sulfonamide carboxylate, sulfate and phosphate.

With the technical scheme(s) of the present invention, the following beneficial effects can be attained:
(1). the granularity of the chips produced by high energy discharge is decreased greatly such that the chips produced in high energy electro-discharge machining can be discharged/removed smoothly through the narrow gaps, thus stable cutting at high efficiency (≥350mm²/min.) is ensured, and the phenomenon of wire breaking is eliminated or greatly reduced;
(2). A welding-like phenomenon on the surface of the workpiece by high pulse electro-discharge machining is eliminated.

### Description of Drawings

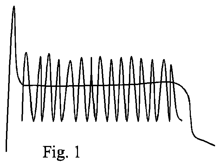

Fig. 1 shows the waveforms of superposed pulses emitted by the low-frequency pulse power supply unit and the high-frequency pulse power supply unit on an oscilloscope.

### Description Of Exemplary Embodiments

Presently, in most cases, reciprocating wire movement cutting is used for high-efficiency cutting to improve productivity. However, it is difficult to achieve continuous and stable machining in high efficiency at 200mm²/min or above, owing to a fact that large-size chips of the discharge product, produced as a result of the high discharge energy in the high cutting efficiency at 200m²/min or higher, are difficult to be discharged through a narrow gap.

The present invention provides an enhanced chip removal method, employing water-soluble wire cutting fluid, and employing specific high-frequency pulse power supply unit and low-frequency pulse power supply unit in two circuits, which emit discharge pulses that are superposed on each other between the electrodes.

The water-soluble wire cutting fluid in the present invention comprises the following components:

| | |
|---|---|
| polyalkyl glycol and/or polyol | 20∼46 wt% |
| alcoholamines | 2∼8 wt% |
| water-soluble antirust agent | 24∼38 wt% |
| non-ionic surfactant | 2∼4 wt% |
| anionic surfactant | 3∼6 wt% |
| low-foam environment-friendly emulsifier | 2∼4 wt% |
| distilled water | balanced amount |

Such water-soluble wire cutting fluid can be used with its high critical point of vaporization and other characteristics to avoid vaporization before a discharge channel is formed, so as to maintain the dielectric property of the solution; after the discharge is completed, the vaporized medium is quickly recovered to the liquid state under a synergistic effect of high boiling point and the anti-dissoving substance, thus deionization and cooling are realized in time, and the vaporized or melted metal material is prevented from being nodulated but is made into chips to be immerged and dispersed in the mixed solution.

In the present invention, high-frequency and low-frequency pulse power supply units are employed to emit superposed dual-frequency discharge pulses between the electrodes, thus eliminating or destroying the condition for producing large-size particles between the electrodes by high pulse discharge, such that the granularity of the chips produced by high energy discharge is greatly decreased to ensure that the chips produced by high energy discharge machining can be immerged and dispersed in the mixed solution and discharged smoothly through the narrow gap.

Herein, the high-frequency and low-frequency pulse power supply units are two separate power supply units, wherein the low-frequency pulse power supply unit emits large discharge pulses for a duration of 30∼90 microseconds between the electrodes, while the high-frequency pulse power supply unit emits small discharge pulses for a duration of 100∼500 nanoseconds between the electrodes; the high-frequency pulse power supply unit and the low-frequency pulse power supply unit emit discharge pulses in two circuits simultaneously, which are superposed on each other, between the electrodes.

Fig. 1 shows the waveforms of the superposed pulses emitted by the low-frequency pulse power supply unit and the high-frequency pulse power supply unit on an oscilloscope.

Hereinafter the technical scheme of the present invention will be described in detail in specific embodiments.

### Embodiment 1: high-efficiency cutting test

In this embodiment, a Novick AR35-MA medium-speed wire cutting machine manufactured in January 2017, equipped with an external high-frequency pulse power supply unit, is used to cut a Cr₁₂ die steel workpiece in thickness of 70mm, with a ∅ 0.18 molybdenum wire electrode at a wire speed of 12 m/s, into 3mm×70mm×120mm thin slices.
The discharge medium (working fluid) is commercial DIC-206 water-soluble wire cutting fluid (produced by Beijing Dongxing Lubricant Co., Ltd.);
Emission from high-frequency pulse power supply unit: duration of discharge pulse: 125 nanoseconds, interval between discharge pulses: 125 nanoseconds, average current: 6A;
Emission from low-frequency pulse power supply unit: duration of discharge pulse: 70 microseconds, interval between discharge pulses: 140 microseconds, average current: 14A;

Result of experiment: the cutting efficiency is as high as 380mm²/min, and there is no wire breaking phenomenon or a welding-like phenomenon on the machining surface.

### Embodiment 2: particle size distribution test

In this embodiment, a Demenghengda BDK7725 high-speed wire cutting machine manufactured in 2001 is used to cut a Cr₁₂ die steel workpiece in thickness of 65 mm, with a ⊄ 0.18 molybdenum wire electrode at a wire speed of 12 m/s, into 3mm thin slices.
The discharge medium (working fluid) is commercial DIC-206 water-soluble wire cutting fluid (produced by Beijing Dongxing Lubricant Co., Ltd.);
Emission from high-frequency pulse power supply unit: duration of discharge pulse: 250 nanoseconds, interval between discharge pulses: 250 nanoseconds, average current: 6.5A;
Emission from low-frequency pulse power supply unit: duration of discharge pulse: 32 microseconds, interval between discharge pulses: 128 microseconds, average current: 6.5A.

The results of the experiment are shown in the following table:

| | Pulse duration | Pulse interval | Average current | Cutting efficiency | Maximum chip size | Distribution ratio |
|---|---|---|---|---|---|---|
| Without high-frequency power supply | 32µs | 128µs | 10A | 140 mm2/min | 17.377µm (10.097µ) | 1.71‰ (9.31‰) |
| Superposed with high frequency power supply | 32µs | 140µs | 6.5 A | 206 mm2/min | 11.565µm (10.097µ) | 0.187% (3.46‰) |
| | 125 ns | 125 ns | 6.5 A | | | |

It can be seen from the above table that the maximum chip size produced at 10A average current is 17.377µm when the work piece is machined solely with low-frequency pulse power supply as in the prior art; in contrast, with the high-frequency pulse power supply superposed, the maximum chip size produced at 13A average current is only 11.565µm.

The result of the experiment proves that the technical scheme of the present invention can greatly decrease the granularity of the chips produced in the electric discharge cutting machining.

### Embodiment 3: Reliability test of high-efficiency cutting

In this embodiment, a Novick AR40-MA medium-speed wire cutting machine manufactured in 2018, equipped with an external high-frequency pulse power supply unit, is used to cut a Cr12 die steel workpiece in thickness of 70mm, with a ⊄ 2.0 molybdenum wire electrode at a wire speed of 12 m/s, into 3mm thin slices.
The discharge medium (working fluid) is commercial DIC-206 water-soluble wire cutting fluid (produced by Beijing Dongxing Lubricant Co., Ltd.);
Emission from high-frequency pulse power supply unit: duration of discharge pulse: 250 nanoseconds, interval between discharge pulses: 250 nanoseconds, average current: 6.5A;
Emission from low-frequency pulse power supply unit: duration of discharge pulse: 70 microseconds, interval between discharge pulses: 140 microseconds, average current: 13A;

Result of experiment: there is no wire breaking phenomenon or a welding-like phenomenon on the machining surface after continuous cutting for 20 hours (continuous cutting for 3-4 hours in each cycle) at an efficiency >350mm²/min.

The result of the experiment proves that the technique of the present invention is practical and reliable, and can greatly improve the productivity of electrical discharge machining.

While the present invention is described above in preferred embodiments, the scope of protection of the present invention is not limited to those embodiments. Those skilled in the art should understand that the scope of protection of the present invention is only defined by the appended claims.

## Claims

1. An enhanced chip removal method for electrical discharge machining, comprising: employing water-soluble wire cutting fluid in the electrical discharge cutting process; employing high-frequency and low-frequency pulse power supply units and employing superposed discharge pulses in dual frequencies to provide discharge pulses to electrodes, wherein: the high-frequency and low-frequency pulse power supply units are two separate power supply units, the low-frequency pulse power supply unit emits large discharge pulses for a duration of 30∼90 microseconds between the electrodes while the high-frequency pulse power supply unit emits small discharge pulses for a duration of 100∼500 nanoseconds between the electrodes; the high-frequency pulse power supply unit and the low-frequency pulse power supply unit emit discharge pulses in two circuits simultaneously, which are superposed on each other, between the electrodes;
**characterised in that** the water-soluble wire cutting fluid comprises the following components:
| | |
|---|---|
| polyalkyl glycol and/or polyol | 20∼46 wt% |
| alcoholamine | 2∼8 wt% |
| water-soluble antirust agent | 24∼38 wt% |
| non-ionic surfactant | 2∼4 wt% |
| anionic surfactant | 3∼6 wt% |
| low-foam environment-friendly emulsifier | 2∼4 wt% |
| distilled water | balanced amount |
wherein the low-foam environment-friendly emulsifier is selected from one or two of fatty alcohol alkoxylate compounds and fatty alcohol ethoxylate compounds.

2. The enhanced chip removal method for electrical discharge machining according to claim 1, wherein the low-frequency pulse power supply unit emits large discharge pulses for a duration of 70 microseconds between the electrodes, while the high-frequency pulse power supply unit emits small discharge pulses for a duration of 250 nanoseconds between the electrodes

3. The enhanced chip removal method for electrical discharge machining according to claim 1, wherein the polyalkyl glycol and/or polyol is selected from one or more of ethylene glycol, diethylene glycol, triethylene glycol, propylene glycol, glycerol, and polyethylene glycol, wherein the molecular weight of the polyethylene glycol is 200∼800.

4. The enhanced chip removal method for electrical discharge machining according to claim 1, wherein the water-soluble antirust agent is a mixture of A1 and A2, wherein A1 is selected from one or more of AQUALOX@240, boric acid, p-tert-butyl benzoic acid and C6-C14 aliphatic dicarboxylic acids, and A2 is selected from one or more of monoethanolamine, triethanolamine, isopropanolamine, diisopropanolamine, triisopropanolamine, mixed isopropanolamine, morpholine, and butanolamine.

5. The enhanced chip removal method for electrical discharge machining according to claim 1, wherein the anionic surfactant is selected from one or more of ether carboxylate, alkyl sulfonamide carboxylate, sulfate and phosphate.

6. The enhanced chip removal method for electrical discharge machining according to claim 1, wherein the alcoholamine is selected from one or more of monoethanolamine, triethanolamine, isopropanolamine, diisopropanolamine, triisopropanolamine, butanolamine, diethylene glycol amine and 2-amino-2-methyl-1-propanol; the non-ionic surfactant is selected from one or more of amide, polyethylene oxide-propylene oxide ether and polyether diol PE series.

## Patentansprüche

1. Verbessertes Chipentfernungsverfahren für die elektrische Entladungsbearbeitung, umfassend:
Verwenden von wasserlöslichem Drahtschneidfluid in dem elektrischen Entladungsschneidprozess;
Verwenden von Hochfrequenz- und Niederfrequenz-Pulsleistungsversorgungseinheiten und Verwenden von überlagerten Entladungspulsen in zweifachen Frequenzen, um Elektroden Entladungspulse bereitzustellen, wobei: die Hochfrequenz- und Niederfrequenz-Pulsleistungsversorgungseinheiten zwei separate Leistungsversorgungseinheiten sind, die Niederfrequenz-Pulsleistungsversorgungseinheit große Entladungspulse für eine Dauer von 30 bis 90 Mikrosekunden zwischen den Elektroden emittiert, während die Hochfrequenz-Pulsleistungsversorgungseinheit kleine Entladungspulse für eine Dauer von 100 bis 500 Nanosekunden zwischen den Elektroden emittiert; wobei die Hochfrequenz-Pulsleistungsversorgungseinheit und die Niederfrequenz-Pulsleistungsversorgungseinheit Entladungspulse, die einander überlagern, in zwei Schaltkreisen gleichzeitig zwischen den Elektroden emittieren;
**dadurch gekennzeichnet, dass** das wasserlösliche Drahtschneidfluid die folgenden Komponenten umfasst:
| | |
|---|---|
| Polyalkylglykol und/oder Polyol | 20 bis 46 Gew.% |
| Alkoholamin | 2 bis 8 Gew.% |
| wasserlösliches Antirostmittel | 24 bis 38 Gew.% |
| nichtionisches Tensid | 2 bis 4 Gew.% |
| anionisches Tensid | 3 bis 6 Gew.% |
| schwachschäumenden umweltfreundlichen Emulgator | 2 bis 4 Gew.% |
| destilliertes Wasser | Restmenge |
wobei der schwachschäumende umweltfreundliche Emulgator ausgewählt ist aus einer oder zwei von Fettalkoholalkoxylatverbindungen und Fettalkoholethoxylatverbindungen.

2. Verbessertes Chipentfernungsverfahren für die elektrische Entladungsbearbeitung nach Anspruch 1, wobei die Niederfrequenz-Pulsleistungsversorgungseinheit große Entladungspulse für eine Dauer von 70 Mikrosekunden zwischen den Elektroden emittiert, während die Hochfrequenz-Pulsleistungsversorgungseinheit kleine Entladungspulse für eine Dauer von 250 Nanosekunden zwischen den Elektroden emittiert.

3. Verbessertes Chipentfernungsverfahren für die elektrische Entladungsbearbeitung nach Anspruch 1, wobei das Polyalkylglykol und/oder Polyol ausgewählt ist aus einem oder mehreren von Ethylenglykol, Diethylenglykol, Triethylenglykol, Propylenglykol, Glycerin und Polyethylenglykol, wobei das Molekulargewicht des Polyethylenglykols 200 bis 800 beträgt.

4. Verbessertes Chipentfernungsverfahren für die elektrische Entladungsbearbeitung nach Anspruch 1, wobei das wasserlösliche Antirostmittel eine Mischung aus A1 und A2 ist, wobei A1 ausgewählt ist aus einem oder mehreren von AQUALOX@240, Borsäure, p-tert-Butylbenzoesäure und aliphatischen C₆- bis C₁₄-Dicarbonsäuren, und A2 ausgewählt ist aus einem oder mehreren von Monoethanolamin, Triethanolamin, Isopropanolamin, Diisopropanolamin, Triisopropanolamin, gemischtem Isopropanolamin, Morpholin und Butanolamin.

5. Verbessertes Chipentfernungsverfahren für die elektrische Entladungsbearbeitung nach Anspruch 1, wobei das anionische Tensid ausgewählt ist aus einem oder mehreren von Ethercarboxylat, Alkylsulfonamidcarboxylat, Sulfat und Phosphat.

6. Verbessertes Chipentfernungsverfahren für die elektrische Entladungsbearbeitung nach Anspruch 1, wobei das Alkoholamin ausgewählt ist aus einem oder mehreren von Monoethanolamin, Triethanolamin, Isopropanolamin, Diisopropanolamin, Triisopropanolamin, Butanolamin, Diethylenglykolamin und 2-Amino-2-methyl-1-propanol; das nichtionische Tensid ausgewählt ist aus einem oder mehreren von Amid, Polyethylenoxid-Propylenoxidether und den Polyetherdiol-PE-Reihen.

## Revendications

1. Procédé amélioré d'enlèvement de copeaux pour un usinage par décharge électrique, comprenant :
l'utilisation d'un fluide de découpage par fil hydrosoluble dans le procédé de découpage par décharge électrique ;
l'utilisation d'unités d'alimentation électrique à impulsions haute fréquence et basse fréquence et l'utilisation d'impulsions de décharge superposées à deux fréquences pour fournir des impulsions de décharge aux électrodes, dans lequel : les unités d'alimentation électrique à impulsions haute fréquence et basse fréquence sont deux unités d'alimentation électrique séparées, l'unité d'alimentation électrique à impulsions basse fréquence émet de grandes impulsions de décharge pendant une durée de 30 à 90 microsecondes entre les électrodes pendant que l'unité d'alimentation électrique à impulsions haute fréquence émet de petites impulsions de décharge pendant une durée de 100 à 500 nanosecondes entre les électrodes ; l'unité d'alimentation électrique à impulsions haute fréquence et l'unité d'alimentation électrique à impulsions basse fréquence émettent des impulsions de décharge dans deux circuits simultanément, qui sont superposés l'un sur l'autre, entre les électrodes ;
**caractérisé en ce que**
le fluide de découpage par fil hydrosoluble comprend les éléments suivants :
| | |
|---|---|
| polyalkylglycol et/ou polyol | 20 à 46 % en poids |
| aminoalcool | 2 à 8 % en poids |
| agent antirouille hydrosoluble | 24 à 38 % en poids |
| tensioactif non ionique | 2 à 4 % en poids |
| tensioactif anionique | 3 à 6 % en poids |
| émulsifiant écologique peu moussant eau distillée | 2 à 4 % en poids complément |
dans lequel l'émulsifiant écologique peu moussant est choisi parmi un ou deux des composés alcoxylés d'alcools gras et des composés éthoxylés d'alcools gras.

2. Procédé amélioré d'enlèvement de copeaux pour un usinage par décharge électrique selon la revendication 1, dans lequel l'unité d'alimentation électrique à impulsions à basse fréquence émet de grandes impulsions de décharge pendant une durée de 70 microsecondes entre les électrodes, pendant que l'unité d'alimentation électrique à impulsions à haute fréquence émet de petites impulsions de décharge pendant une durée de 250 nanosecondes entre les électrodes.

3. Procédé amélioré d'enlèvement de copeaux pour un usinage par décharge électrique selon la revendication 1, dans lequel le polyalkylglycol et/ou le polyol sont choisis parmi un ou plusieurs parmi l'éthylène glycol, le diéthylène glycol, le triéthylène glycol, le propylène glycol, le glycérol et le polyéthylène glycol, dans lequel le poids moléculaire du polyéthylène glycol est de 200 à 800.

4. Procédé amélioré d'enlèvement de copeaux pour un usinage par décharge électrique selon la revendication 1, dans lequel l'agent antirouille hydrosoluble est un mélange de A1 et A2, dans lequel A1 est choisi parmi un ou plusieurs parmi AQUALOX@240, l'acide borique, l'acide p-tert-butylbenzoïque et des acides dicarboxyliques aliphatiques en C₆-C₁₄, et A2 est choisi parmi un ou plusieurs parmi la monoéthanolamine, la triéthanolamine, l'isopropanolamine, la diisopropanolamine, la triisopropanolamine, l'isopropanolamine mixte, la morpholine et la butanolamine.

5. Procédé amélioré d'enlèvement de copeaux pour un usinage par décharge électrique selon la revendication 1, dans lequel le tensioactif anionique est choisi parmi un ou plusieurs parmi le carboxylate d'éther, le carboxylate d'alkylsulfonamide, le sulfate et le phosphate.

6. Procédé amélioré d'enlèvement de copeaux pour un usinage par décharge électrique selon la revendication 1, dans lequel l'aminoalcool est choisi parmi une ou plusieurs parmi la monoéthanolamine, la triéthanolamine, l'isopropanolamine, la diisopropanolamine, la triisopropanolamine, la butanolamine, la diéthylène glycol amine et le 2-amino-2-méthyl-1-propanol ; le tensioactif non ionique est choisi parmi un ou plusieurs parmi l'amide, l'éther d'oxyde de polyéthylène-d'oxyde de propylène et le polyéther diol série PE.
